# EUROPÄISCHE PATENTANMELDUNG

(11) **EP 0 709 616 A1**
(43) Veröffentlichungstag der Anmeldung: **01.05.1996**
(21) Anmeldenummer: 95114869.1
(22) Anmeldetag: 21.09.1995
(51) Int. Cl.: F16L 59/18, F16L 27/08

(54) **Drehverbindung für Kryogenleitungen**

(30) Priorität: 29.09.1994 DE 4434809
(71) Anmelder: Daimler-Benz Aerospace Aktiengesellschaft, D-81663 München (DE); Tupolev AG, Moskau, 111250 (RU)
(72) Erfinder: Luger, Peter, Dr., D-85635 Höhenkirchen (DE); Grafwallner, Franz, Dipl.-Ing., D-83684 Tegernsee (DE); Peller, Helmuth, Dr., D-85635 Höhenkirchen-Siegertsbrunn (DE); Müller, Martin, Dipl.-Ing., D-85635 Höhenkirchen-Siegertsbrunn (DE); Malyshev, Valentin V., Prof., Russia, 111020 Moscow (RU); Logviniouk, Viacheslav P., Dr., Russia, 117311 Moscow (RU); Ignatov, Alexsei I., Ing., Russia, 107140 Moscow (RU)
(74) Vertreter: Frick, Gerhard, Dipl.-Ing.

(57) **Zusammenfassung**

Drehverbindung für Kryogenleitungen mit mindestens zwei, mit je einem Isoliermantel umgebenen Rohrleitungsstücken (10,10a), die sich unter Erzeugung eines hauptsächlich axial verlaufenden Ringspaltes (11) überlappen, mit einer Dichteinrichtung (16) im "kalten" Bereich des Ringspaltes, mit einer hermetischen Dichteinrichtung (15) am "warmen" Ende des Ringspaltes und mit einem die Rohrleitungsstücke verbindenden Drehlager (L).

Das Drehlager ist außerhalb der hermetischen Dichteinrichtung vom strömenden Medium wärmeisoliert angeordnet.

Der Ringspalt einschließlich seiner Dichteinrichtungen ist zur Achse des Drehlagers konzentrisch angeordnet.

## Beschreibung

Die Erfindung bezieht sich auf eine Drehverbindung für Kryogenleitungen gemäß dem Oberbegriff des Anspruches 1.

Drehverbindungen oder Drehkupplungen sind beim Stand der Technik in den verschiedensten Ausführungsformen bekannt und beziehen sich zumeist auf Rohrleitungen im üblichen Temperaturbereich, also der Umgebungstemperatur. Neben den üblichen Rohrleitungen sowie Verbindungslementen für Wasser und Gas, die vorwiegend auch unter dem Erdreich verlegt werden, sind beispielsweise auch Betankungsleitungen für Tankschiffe etc. mit Isolierungen bekannt. Bekannt sind auch Rohrleitungen für heiße und kalte Medien und ihre Verbindungselemente, die zur Verhinderung von unerwünschtem Wärmedurchgang mit Schichten aus wärmeisolierendem Material, wie beispielsweise Glaswolle, ummantelt sind.

Bei Kryogenleitungen und deren Verbindungselementen besteht das Problem, daß die Dichtungs- und Lagerelemente die tiefe Temperatur annehmen, wodurch die Dichtelemente verhärten und ihre Dichtfunktion verlieren. Außerdem ist bei diesen tiefen Temperaturen von beispielsweise -160° C eine übliche Schmierung der Lagerelemente nicht mehr möglich, was sich nachteilig auf die Lebensdauer und das Verschleißverhalten auswirkt.

Der vorliegenden Erfindung liegt daher die Aufgabe zugrunde, eine Drehverbindung für Kryogenleitungen der eingangs genannten Art aufzuzeigen, die bei sehr guter Isolierwirkung sowohl zuverlässig dichtet, als auch eine hohe Lebensdauer der Dichtungs- und Lagerelemente gewährleistet.

Diese Aufgabe wird durch die im Anspruch 1 aufgezeigten Merkmale gelöst. In den Unteransprüchen sind Ausgestaltungen angegeben, in der nachfolgenden Beschreibung werden Ausführungsbeispiele anhand der Figuren der Zeichnung erläutert. Es zeigen in vereinfachter Darstellung:
- Fig. 1: einen Teillängsschnitt einer Drehverbindung in einer Kryogenleitung,
- Fig. 2a: einen Teillängsschnitt einer Drehverbindung gemäß Fig. 1 mit axial nachgiebiger Dichtlippe,
- Fig. 2b: einen Teillängsschnitt einer Drehverbindung gemäß Fig. 1 mit radial federndem Dichtelement,
- Fig. 2c: einen Teillängsschnitt einer Drehverbindung gemäß Fig. 1 mit Labyrinthdichtung,
- Fig. 2d: einen Teillängsschnitt einer Drehverbindung gemäß Fig. 1 mit feinstrukturiertem Fasermaterial als Spaltdichtung.

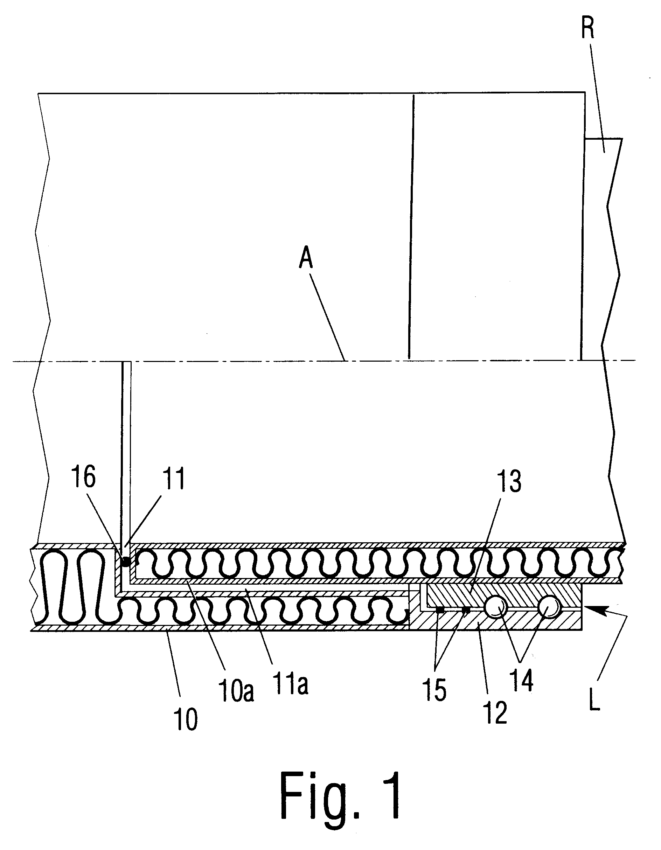

Die in Fig. 1 skizzierte Ausführungsform der für Tieftemperaturen geeigneten Drehverbindung für Kryogenrohrleitungen weist eine Vakuumisolierung auf, die so ausgebildet ist, daß die Mantelenden 10, 10a der Isolierung einander überlappen und sich zwischen beiden Teilen ein Ringspalt 11, 11a mit kleiner radialer und wesentlich größerer axialer Erstreckung ergibt. Die in diesen Spalt eindringende bzw. darin vorhandene kryogene Flüssigkeit nimmt die zum Spaltende hin auf Umgebungstemperatur ansteigende Temperatur der Spaltwände an, wobei sie zumindest im Bereich des Spaltendes in gasförmigen Zustand übergeht. An das Spaltende schließt sich der hermetische Dichtungsbereich (Gleitdichtungen 15) und der Lagerbereich (Drehlager L) der Drehverbindung an, die sich nun beide im "warmen" Bereich - also dem Bereich mit Umgebungstemperatur - befinden. Diverse Ausführungen von Drehlagern mit begrenztem oder unbegrenztem Drehwinkel um die Achse A sind hier einsetzbar. Ebenfalls sind diverse Ausführungen von Dichtungen mit der gleichen Beweglichkeit einsetzbar.

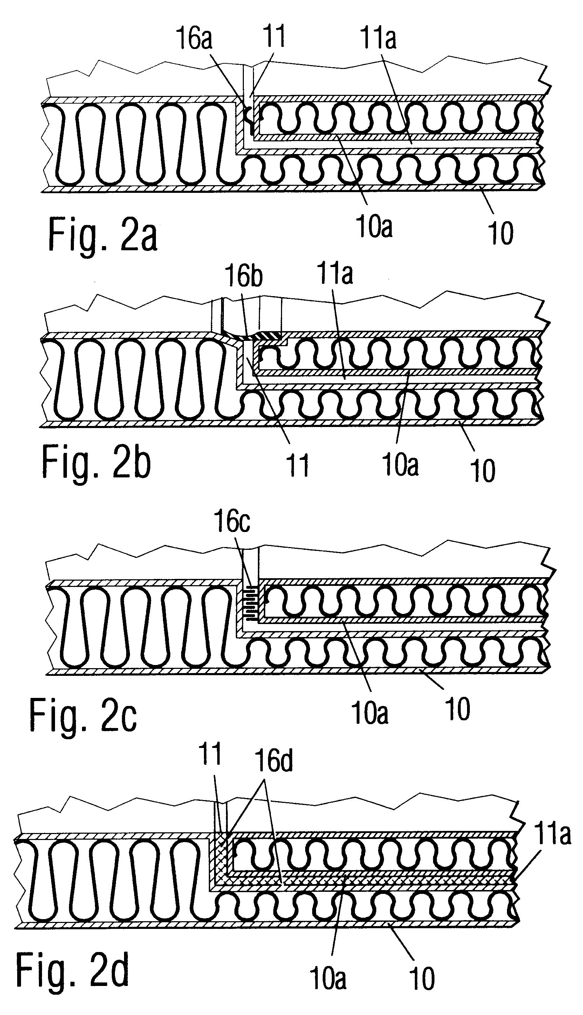

Das durch die Enge des Ringspaltes bereits gebremste Eindringen der Kryogenflüssigkeit wie auch der Austausch von Flüssigkeit und Gas kann durch die nachstehend aufgeführten und auch miteinander kombinierbaren Elemente noch stärker reduziert werden, wie die Ausführungsformen gemäß den Fig. 2a bis 2d zeigen.

So zeigt die Ausführung gemäß Fig. 2a im Radialspalt 11 eine axial federnd anliegende Dichtlippe 16a. Im Ausführungsbeispiel gemäß Fig. 2b ist im Eintrittsbereich des Radialspaltes 11 ein federndes Dichtelement 16b angeordnet, das mit Federkraft den Spalt weitgehend abdichtet, aber doch noch einen Druckausgleich zwischen dem Ringspalt 11, 11a und dem Leitungsinneren zuläßt. In verschiedenen Fällen können auch eine oder mehrere kleine Bohrungen für diesen Druckausgleich vorgesehen werden (nicht dargestellt)

Eine weitere Ausführungsform gemäß Fig. 2c sieht vor, daß der Radialspalt 11 mit einer Labyrinthdichtung 16c versehen ist, die den Austausch von Flüssigkeit und Gas in der genannten Weise reduziert.

Eine Ausführungsform gemäß Fig. 2d sieht nun vor, den Axialspalt 11a und den Radialspalt 11 ganz oder teilweise mit feinstrukturiertem Fasermaterial - beispielsweise Filz - auszufüllen und so den Austausch von Flüssigkeit und Gas zu behindern.

Das an die Isoliermantelenden 10, 10a anschließende Drehlager L kann dank der Erfindung aus üblichem Lagerwerkstoff bestehen. Der Außenring 12 und der Innenring 13 sind über Kugeln 14 bzw. Rollen frei drehbar ohne Axialspiel gelagert. Der Spalt zwischen den Ringen 12, 13 zum Axialspalt 11a hin ist mit Gleitdichtungen 15 abgedichtet, wobei letztere ebenfalls aus einem üblichen Dichtungswerkstoff bestehen können.

## Patentansprüche

1. Drehverbindung für Kryogenleltungen mit mindestens zwei, mit je einem Isoliermantel umgebenen Rohrleitungsstücken, die sich unter Erzeugung eines hauptsächlich axial verlaufenden Ringspaltes überlappen, mit einer Dichteinrichtung in dem dem strömenden Medium zugewandten, "kalten" Bereich des Ringspaltes, mit einer hermetischen Dichteinrichtung am umgebungsseitigen, "warmen" Ende des Ringspaltes und mit einem die Rohrleitungsstücke um eine Achse drehbar verbindenden Drehlager, **dadurch gekennzeichnet,** daß das Drehlager (L) außerhalb der hermetischen Dichteinrichtung (Gleitdichtung 15) vom strömenden Medium wärmeisoliert angeordnet ist, und daß der Ringspalt (11, 11a) einschließlich seiner Dichteinrichtungen (15, 16, 16a bis d) zur Achse (A) des Drehlagers (L) konzentrisch angeordnet ist.

2. Drehverbindung nach Anspruch 1, **dadurch gekennzeichnet,** daß die Dichteinrichtung (16) als axial federndes Ringelement mit an der Wand des Ringspaltes (11, 11a) anliegender Dichtlippe (16a) ausgebildet ist, deren Anpreßkraft einstellbar sein kann.

3. Drehverbindung nach Anspruch 1, **dadurch gekennzeichnet,** daß die Dichteinrichtung (16) als radial federnd anliegendes Dichtelement (16b) ausgebildet ist, dessen Anpreßkraft einstellbar sein kann.

4. Drehverbindung nach Anspruch 1, **dadurch gekennzeichnet,** daß die Dichteinrichtung (16) in dem Ringspalt (11, 11a) angeordnet und als Labyrinthdichtung (16c) ausgebildet ist.

5. Drehverbindung nach einem oder mehreren der Ansprüche 1 bis 4, **dadurch gekennzeichnet,** daß der Radialspalt (11) und/oder der Axialspalt (11a) ganz oder teilweise mit feinstrukturiertem porösem bzw. faserigem Material (16d) - beispielsweise Filz - gefüllt ist.

6. Drehverbindung nach einem oder mehreren der Ansprüche 1 bis 5, **dadurch gekennzeichnet,** daß im Bereich des Dichtelementes (16) ein Druckausgleich zwischen Spalt und strömendem Medium möglich ist, z.B. über zusätzliche Bohrungen.
